# EUROPÄISCHE PATENTSCHRIFT

(11) **EP 2 209 406 B1**
(45) Veröffentlichungstag und Bekanntmachung des Hinweises auf die Patenterteilung: **22.02.2012**
(21) Anmeldenummer: 08804689.1
(22) Anmeldetag: 24.09.2008
(51) Int. Cl.: A47J 31/36

(54) **GETRÄNKEAUTOMAT MIT DICHTBAUTEIL AN DER ANSTICHEINRICHTUNG**
AUTOMATIC BEVERAGE DISPENSER HAVING A SEALING PART ON THE TAP UNIT
DISTRIBUTEUR DE BOISSONS DOTÉ D'UN ÉLÉMENT D'ÉTANCHÉITÉ SUR LE DISPOSITIF DE PERÇAGE

(30) Priorität: 16.10.2007 DE 102007049601
(43) Veröffentlichungstag der Anmeldung: 28.07.2010
(73) Patentinhaber: Kraft Foods R & D, Inc., Northfield, IL 60093 (US)
(72) Erfinder: BREZOVNIK, Peter, 3330 Mozirje (SI); PAVLOVIC, Henrik, 3333 Ljubno ob Savinji (SI); SEDOVSEK, Aleksander, 3330 Mozirje (SI); ZIBRET, Igor, 3327 Smartno ob Paki (SI)
(74) Vertreter: Heinemann, Monica
(86) Internationale Anmeldenummer: PCT/EP2008/062785
(87) Internationale Veröffentlichungsnummer: WO 2009/050009

(56) Entgegenhaltungen:
- WO-A-2005/079637

## Beschreibung

Die Erfindung betrifft einen Heißgetränkeautomaten mit einer Aufnahmeeinrichtung für Getränkesubstratkapseln und mit einer Ansticheinrichtung (Piercer) für einen Heißwasserzulauf und einer Ansticheinrichtung für den Ablauf eines Getränkeprodukts in der Aufnahmeeinrichtung. Die Ansticheinrichtungen dienen zum Anstechen der Kapsel bei der Zubereitung eines Getränks und sind auf derselben Seite der eingesetzten Kapsel angeordnet und an einem gemeinsamen Halter ausgebildet.

Einen derartigen Getränkeautomaten offenbart die WO 2005/079637 A1. Sie weist eine aufklappbare Aufnahmeeinrichtung für Getränkesubstratkapseln auf, die zugleich eine Art Brühkammer darstellt. Zur Zubereitung eines Getränks wird sie mit einer Substratkapsel beschickt, die in einer vorgeschriebenen Orientierung in die Aufnahmeeinrichtung einzusetzen ist. Diese wird beim Schließen der Brühkammer von Ansticheinrichtungen geöffnet, die einen Zu- und einen Ablauf bilden. Über den Zulauf wird heißes Wasser von einer Unterseite aus dezentral in die Kapsel eingeleitet. Das heiße Wasser löst in der Kapsel ein Getränkevorprodukt oder brüht ein in der Kapsel enthaltenes Mahlgut für beispielsweise Kaffee. Das enthaltene Getränk wird aus dem von unten zentral in die Kapsel eingestochenen Ablauf abgeführt, der in einem Abstand zum Zulauf angeordnet ist. Nach der Zubereitung des gewünschten Getränks kann die Aufnahmeeinrichtung geöffnet, die leere Substratkapsel entnommen und gegen eine frische Kapsel ausgetauscht werden.

Da die Substratkapseln von der Unterseite her angestochen werden, kann Flüssigkeit im Bereich der Ansticheinrichtungen austreten und den Innenraum der Aufnahmeeinrichtung verschmutzen. Um eine einwandfreie Funktion des Automaten zu erhalten, muss die Aufnahmeeinrichtung daher im Bereich der Ansticheinrichtung relativ häufig gereinigt werden. Dafür sind die beiden Ansticheinrichtungen auf einem gemeinsamen Halter angebracht, der aus der Aufnahmeeinrichtung entnehmbar ist. Bei der Entnahme des Halters können jedoch Einzelteile, wie zum Beispiel eine Dichtung an einer Ansticheinrichtung, verloren gehen.

Es ist daher Aufgabe der Erfindung, einen Heißgetränkeautomaten anzugeben, dessen Reinigung weniger problematisch ist.

Diese Aufgabe wird bei einem Heißgetränkeautomaten der eingangs genannten Art dadurch gelöst, dass Dichtungen an jeder Ansticheinrichtung angebracht sind, die während eines Zubereitungsvorgangs die Ansticheinrichtungen gegenüber der Kapsel flüssigkeitsdicht abschließen und die als ein zusammenhängendes Dichtbauteil ausgebildet sind. Bei der Entnahme zur Reinigung der Ansticheinrichtungen ist also ein Verlust einzelner Dichtungen und damit eine Funktionsstörung des Automaten nicht mehr zu befürchten. Die Dichtungen stellen nun vielmehr ein einziges Bauteil dar, das aufgrund seiner Größe leichter handhabbar ist und nicht so leicht verloren gehen kann.

Nach einer vorteilhaften Ausgestaltung der Erfindung kann das Dichtbauteil zwei Dichtungen als ringförmige Dichtabschnitte aufweisen, die konzentrisch um die Ansticheinrichtungen platzierbar sind und miteinander über einen im Wesentlichen ebenflächigen bandförmigen Laschenabschnitt verbunden sind. Der Laschenabschnitt verbindet die Dichtungen dauerhaft und unverlierbar miteinander. Er erstreckt sich etwa über den Abstand, den die beiden Dichtungen im Betriebszustand zueinander einhalten. Eine größere Länge des Laschenabschnitts zwischen den beiden Dichtungen ist nicht erforderlich, weil sie im Einbauzustand des Dichtbauteils als überschüssige Länge den Betrieb stören könnte. Einseitig an einer der beiden Dichtungen angebracht, kann eine Lasche dagegen der leichteren Entnahme des Dichtbauteils zu Reinigungs- und Servicezwecken dienen.

Nach einer weiteren vorteilhaften Ausgestaltung der Erfindung kann das Dichtbauteil als Formteil ausgebildet sein, das in einer Aufnahmevertiefung mit einer korrespondierenden Form in den Halter einsetzbar ist. Da das Dichtbauteil aus einem elastischen, also einem verformbaren weichen Material besteht, wohingegen der Halter formstabil, zum Beispiel aus Hartkunststoff gefertigt ist, lässt sich das Dichtbauteil durch Formschluss im Halter befestigen, so dass keine zusätzlichen Befestigungsmittel erforderlich sind. Dadurch kann eine einfache Montage und Demontage des Dichtbauteils erreicht werden.

Nach einer weiteren vorteilhaften Ausgestaltung der Erfindung kann das Dichtbauteil bezüglich des Halters kapselseitig in die Aufnahmevertiefung einsetzbar sein. Dadurch kann es ohne Entnahme des gesamten Halters bei geöffneter Aufnahmeeinrichtung separat entnommen und gereinigt werden. Weil es von einer Öffnungsseite der Aufnahmeeinrichtung her zugänglich ist, kann es darüber hinaus besonders bequem auf seine Funktion und zum Beispiel auf äußere Beschädigungen hin überprüft werden. Nach einer weiteren vorteilhaften Ausgestaltung der Erfindung können der Halter und das Dichtbauteil einstückig, zum Beispiel in Zwei-Komponenten-(2K-)Technologie, hergestellt sein. Eine einstückige Herstellung erspart den Montageschritt für die Befestigung des Dichtbauteils im Halter. Außerdem ist dadurch das Dichtbauteil unverlierbar im Halter gelagert, so dass auch bei wenig aufmerksamer Benutzung und Reinigung des Heißgetränkeautomaten ein Verlust der Dichtung und damit ein Verlust an Funktionalität des Getränkeautomaten nicht zu befürchten ist. Die 2K-Technologie bewirkt außerdem eine innige Verbindung zwischen Halter und Dichtbauteil, die zuverlässig und dauerhaft aufrechterhalten bleibt.

Das Prinzip der Erfindung wird im Folgenden anhand einer Zeichnung beispielshalber noch näher erläutert. In der Zeichnung zeigen:
- Fig. 1:: einen Halter mit Ansticheinrichtungen und Dichtung,
- Fig. 2:: ein Dichtbauteil allein, und
- Fig. 3:: einen Halter ohne Dichtbauteil.

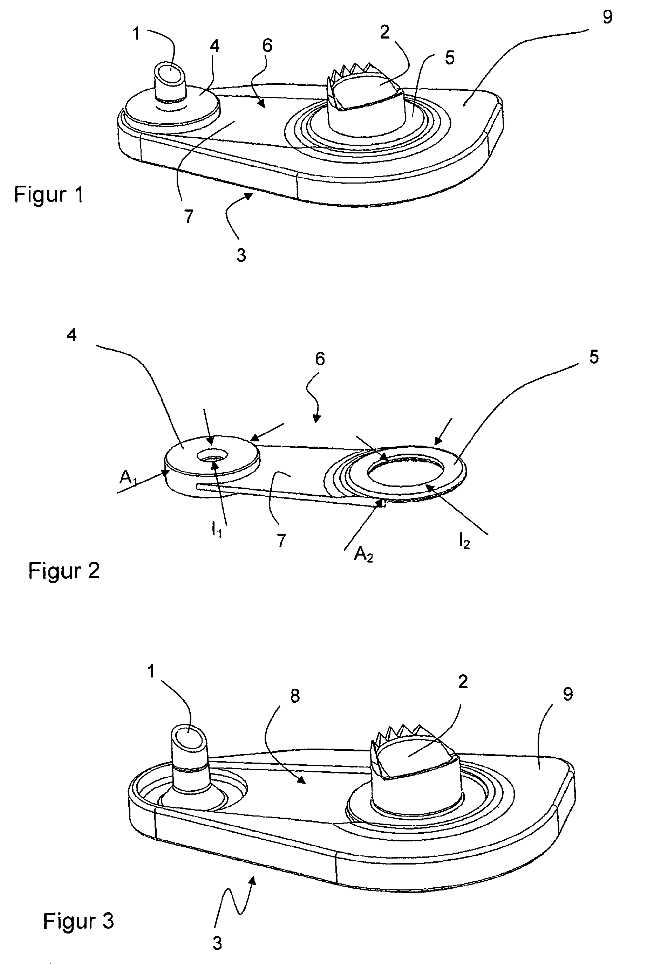

Fig. 1 stellt einen Halter 3 eines Getränkeautomaten dar. Er umfasst zwei Ansticheinrichtungen 1, 2 auf einem plattenförmigen Grundkörper 9. In dessen horizontaler Einbaulage im Automaten ragen die Ansticheinrichtungen 1, 2 senkrecht nach oben. Im Betrieb stechen sie daher eine Kapsel von derselben Seite, nämlich ihrer Unterseite aus, an. Jede der beiden Ansticheinrichtungen 1, 2 umzieht eine Dichtung 4, 5 konzentrisch. Die Dichtungen 4, 5 sorgen für eine flüssigkeitsdichte Abdichtung der Ansticheinrichtungen 1, 2 gegenüber einer angestochenen Kapsel. Sie verhindern damit eine Verschmutzung der Aufnahmeeinrichtung und reduzieren dadurch den Unterhaltsaufwand des Getränkeautomaten.

Die Ansticheinrichtungen 1, 2 sind in einem gewissen Abstand zueinander angeordnet, um bei der Zu- und Abfuhr von Wasser ein Getränkevorprodukt in der Kapsel möglichst vollständig zu erfassen. Dementsprechend sind auch die Dichtungen 4, 5 in einem Abstand zueinander auf dem Halter 3 angeordnet. Zwischen ihnen verläuft ein laschenförmiges Band 7, das die beiden Dichtungen 4, 5 zu einem Dichtbauteil 6 verbindet.

Fig. 2 zeigt das Dichtbauteil 6 allein. Die Dichtungen 4, 5 sind ringförmig ausgebildet und weisen unterschiedliche Innendurchmesser entsprechend den Außendurchmessern der Ansticheinrichtungen 1, 2 auf. Dementsprechend können auch ihre Außendurchmesser A1, A2 variieren, sind vorliegend aber fast gleich groß. Zwischen den ringförmigen Dichtungen 4, 5 erstreckt sich das laschenförmige Band 7, das die Dichtungen 4, 5 zu einem Dichtbauteil 6 vereint. Da es nur die Dichtungen 4, 5 zusammenhalten muss, ist das Band 7 materialsparend flach gestaltet. Es ist mit den Dichtungen 4, 5 einstückig ausgebildet und wie diese aus einem elastischen Material hergestellt. An seinem einen Ende schließt das Band 7 an die Dichtung 4 an. Das Band 7 schließt mit seinen beiden Enden an jeweils einer Dichtung 4, 5 entsprechend deren Außendurchmessers A1, A2 an.

Fig. 3 stellt den Halter 3 ohne das Dichtbauteil 6 dar. In seinem plattenförmigen Grundkörper 9 ist um die Ansticheinrichtungen 1, 2 herum und dazwischen verlaufend eine Aufnahmevertiefung 8 ausgebildet, die in ihrer Form dem Dichtbauteil 6 entspricht. Es kann in die Aufnahmevertiefung 8 bündig eingesetzt und dort formschlüssig gehalten werden. Die Adhäsion des elastischen Materials des Dichtbauteils 6 am Material des Halters 3 sorgt dafür, dass es nicht ohne nennenswerten Aufwand aus der Aufnahmevertiefung 8 entnommen werden kann. Damit ist das Dichtbauteil 6 in der Aufnahmevertiefung 8 zuverlässig befestigt, ohne dass zusätzliche Festigungsmittel erforderlich wären.

### Bezugszeichenliste

- 1: Ansticheinrichtung
- 2: Ansticheinrichtung
- 3: Halter
- 4: Dichtung
- 5: Dichtung
- 6: Dichtbauteil
- 7: laschenförmiges Band
- 8: Aufnahmevertiefung
- 9: Grundkörper des Halters 3

- A1: Außendurchmesser der Ansticheinrichtung 1
- A2: Außendurchmesser der Ansticheinrichtung 2
- I1: Innendurchmesser der Ansticheinrichtung 1
- 12: Innendurchmesser der Ansticheinrichtung 2

## Patentansprüche

1. Heißgetränkeautomat mit einer Aufnahmeeinrichtung für Getränkesubstratkapseln und mit einer Ansticheinrichtung (1) für einen Heißwasserzulauf und einer Ansticheinrichtung (2) für einen Ablauf eines Getränks in der Aufnahmeeinrichtung zum Anstich der Kapseln bei der Zubereitung eines Getränks, wobei die Ansticheinrichtungen (1; 2) an einem gemeinsamen Halter (3) auf derselben Seite der eingesetzten Kapsel angeordnet sind, **gekennzeichnet durch** Dichtungen (4; 5) an jeder Ansticheinrichtung (1; 2) zu deren flüssigkeitsdichter Abdichtung gegenüber der Kapsel während des Zubereitungsvorgangs, die als ein zusammenhängendes Dichtbauteil (6) ausgebildet sind.

2. Heißgetränkeautomat nach Anspruch 1, **dadurch gekennzeichnet, dass** das Dichtbauteil (6) zwei ringförmige Dichtungen (4; 5) aufweist, die konzentrisch um die Ansticheinrichtungen (1; 2) platzierbar sind und die über einen im Wesentlichen ebenflächiges laschenförmiges Band (7) miteinander verbunden sind.

3. Heißgetränkeautomat nach Anspruch 1 oder 2, **dadurch gekennzeichnet, dass** das Dichtbauteil (6) als Formteil ausgebildet ist, das in eine Aufnahmevertiefung (8) mit einer korrespondierenden Form in den Halter (3) einsetzbar ist.

4. Heißgetränkeautomat nach einem der obigen Ansprüche, **dadurch gekennzeichnet, dass** das Dichtbauteil (6) kapselseitig in die Aufnahmevertiefung (8) einsetzbar ist.

5. Heißgetränkeautomat nach Anspruch 1 oder 2, **dadurch gekennzeichnet, dass** der Halter (3) und das Dichtbauteil (6) einstückig in 2K-Technologie hergestellt sind.

## Claims

1. Automatic hot beverage dispenser having a receptacle for beverage substrate cartridges and having one tap unit (1) for a hot water inlet and one tap unit (2) for dispensing a beverage into the receptacle for tapping the cartridges upon preparation of a beverage, wherein the tap units (1; 2) are disposed on a common holder (3) on the same side of the inserted cartridge, **characterized by** seals (4; 5) on each tap unit (1; 2) for the fluid-tight sealing thereof against the cartridge during the preparation operation, which seals are configured as a cohesive sealing part (6).

2. Automatic hot beverage dispenser according to claim 1, **characterized in that** the sealing part (6) has two annular seals (4; 5) which can be placed concentrically about the tap units (1; 2) and which are connected to each other via a substantially flat band-like strip (7).

3. Automatic hot beverage dispenser according to claim 1 or 2, **characterized in that** the sealing part (6) is configured as a shaped part which can be inserted into a take-up recess (8) having a corresponding shape in the holder (3).

4. Automatic hot beverage dispenser according to one of the above claims, **characterized in that** the sealing part (6) can be inserted into the take-up recess (8) on the cartridge side.

5. Automatic hot beverage dispenser according to claim 1 or 2, **characterized in that** the holder (3) and the sealing part (6) are produced in one piece using 2-component technology.

## Revendications

1. Distributeur automatique de boissons chaudes comportant un dispositif récepteur de capsules de boissons et un dispositif de perçage (1) pour une admission d'eau chaude et un dispositif de perçage (2) pour l'écoulement d'une boisson dans le dispositif récepteur servant à percer les capsules lors de la préparation d'une boisson, où les dispositifs de perçage (1 ; 2) sont disposés sur un support commun (3) du même côté de la capsule encastrée, **caractérisé par** des joints d'étanchéité (4 ; 5) sur chaque dispositif de perçage (1 ; 2) afin d'en assurer l'étanchéité aux liquides par rapport à la capsule durant le processus de préparation, qui sont formés comme un seul élément cohérent d'étanchéité (6).

2. Distributeur automatique de boissons chaudes selon la revendication 1, **caractérisé en ce que** l'élément d'étanchéité (6) présente deux joints d'étanchéité annulaires (4 ; 5) qui peuvent être placés concentriquement autour des dispositifs de perçage (1 ; 2) et qui sont reliés ensemble par une bande (7) en forme de languette et sensiblement plane.

3. Distributeur automatique de boissons chaudes selon la revendication 1 ou 2, **caractérisé en ce que** l'élément d'étanchéité (6) est formé comme une pièce moulée qui peut être encastrée dans un évidement (8) de forme correspondante dans le support (3).

4. Distributeur automatique de boissons chaudes selon l'une des revendications ci-dessus, **caractérisé en ce que** l'élément d'étanchéité (6) peut être encastré dans l'évidement (8) du côté de la capsule.

5. Distributeur automatique de boissons chaudes selon la revendication 1 ou 2, **caractérisé en ce que** le support (3) et l'élément d'étanchéité (6) sont produits en un seul bloc selon une technologie à deux composants.
